(19) **Europäisches Patentamt**
**European Patent Office**
**Office européen des brevets**

(11) **EP 3 953 680 B1**

(12) **EUROPÄISCHE PATENTSCHRIFT**

(45) Veröffentlichungstag und Bekanntmachung des Hinweises auf die Patenterteilung:
**25.12.2024 Patentblatt 2024/52**

(21) Anmeldenummer: **20719961.3**

(22) Anmeldetag: **07.04.2020**

(51) Internationale Patentklassifikation (IPC):
*G01N 21/27* (2006.01)    *G01N 21/3504* (2014.01)
*G01N 21/90* (2006.01)

(52) Gemeinsame Patentklassifikation (CPC):
**G01N 21/3504; G01N 21/274;** G01N 21/90

(86) Internationale Anmeldenummer:
**PCT/EP2020/059885**

(87) Internationale Veröffentlichungsnummer:
**WO 2020/208012 (15.10.2020 Gazette 2020/42)**

(54) **VERFAHREN ZUR KONTAKTLOSEN CHARAKTERISIERUNG EINER SUBSTANZ**

METHOD FOR CONTACTLESSLY CHARACTERIZING A SUBSTANCE

PROCÉDÉ DE CARACTÉRISATION D'UNE SUBSTANCE SANS CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2019 DE 102019109583**

(43) Veröffentlichungstag der Anmeldung:
**16.02.2022 Patentblatt 2022/07**

(73) Patentinhaber: **Steinfurth Mess-Systeme GmbH 45309 Essen (DE)**

(72) Erfinder: **GRAFE , Markus 58454 Witten (DE)**

(74) Vertreter: **Bals & Vogel Patentanwälte PartGmbB Konrad-Zuse-Str. 4 44801 Bochum (DE)**

(56) Entgegenhaltungen:
**EP-B1- 2 108 115    US-A- 5 121 337 US-B1- 6 415 233**

**Beschreibung**

Die vorliegende Erfindung betrifft ein Verfahren zur kontaktlosen bzw. zerstörungsfreien Charakterisierung und/oder Untersuchung einer Substanz mithilfe von Wellen, insbesondere von elektromagnetischen Wellen, nach dem Oberbegriff des unabhängigen Verfahrensanspruches. Ferner betrifft die Erfindung ein entsprechendes Messgerät nach dem Oberbegriff des unabhängigen Vorrichtungsanspruches. Weiterhin betrifft die Erfindung ein entsprechendes Computer-Programm-Produkt nach dem unabhängigen Erzeugnisanspruch. Zudem betrifft die Erfindung eine Verwendung eines entsprechenden Messgeräts nach dem unabhängigen Verwendungsanspruch.

Von Materie veränderte oder ausgesandte Wellen (W) können Informationen über die Materie enthalten. Das Ziel kontaktloser Messmethoden wie z.B. der quantitativen Spektroskopie, insbesondere der Absorptionsspektroskopie ist es, durch die Untersuchung der Wellen an bestimmte Informationen über Materie oder einer bestimmten Substanz zu gelangen. Bei der Untersuchung werden die Informationen aus einer spektralen Struktur der Wellen abgelesen, die z.B. aus den Intensitäten an verschiedenen Wellenlängen besteht.

In der Praxis ist problematisch, dass in einer Messung der spektralen Struktur der Wellen die Informationen und damit die bekannte spektrale Struktur mit weiteren Informationen und damit spektralen Störstrukturen gemischt sein können, die ein Ablesen der gewünschten Informationen aus der Messung erschweren. Die Störstrukturen können z.B. durch weitere Materie in der Messstrecke, durch Interferenzen an einem Behälter oder durch die Quelle der Wellen selbst verursacht werden.

Eine bekannte technische Lösung des Problems ist die Aufnahme und Verarbeitung von zwei Messungen, die unter verschiedenen Messumständen aufgenommen wurden, wobei sich die Messungen möglichst nur in der Ausprägung der gewünschten Informationen unterscheiden und wobei die Informationen für eine der beiden Messungen bekannt sind. So kann mithilfe von mathematischen Methoden, wie z.B. einer Subtraktion der beiden Messungen, die gewohnte spektrale Struktur isoliert werden, aus der dann die Informationen hergeleitet werden können. Die zusätzliche Messung mit bekannten Informationen wird auch Leer-, Hintergrund- oder Referenzmessung genannt. Informationen über die Substanz können Eigenschaften wie Temperatur, Druck oder die chemische Zusammensetzung betreffen und werden in diesem Dokument auch einfach Eigenschaften genannt.

Das Verfahren der Referenzmessung ist offenbar nur dann zweckmäßig, wenn die Messumstände ermöglichen, dass ausschließlich die Informationen variiert werden können. Praktisch wird dies z.B. erreicht, indem zunächst eine Referenzmessung an einem leeren Behälter, wie z.B. einer Küvette ohne Substanz, durchgeführt wird. Die bekannten Informationen für diese Messung sind dann wörtlich "Substanz ist nicht vorhanden". Anschließend wird die Substanz in den Behälter eingefüllt und die eigentliche Messung wird durchgeführt. Nach Verarbeitung der beiden Messungen z.B. durch eine Subtraktion liegt eine von Störstrukturen befreite spektrale Struktur vor, aus der die Informationen über die eingefüllte Substanz abgelesen werden können. Im Feldeinsatz kontaktloser Messmethoden ist dieses Verfahren oft nur eingeschränkt anwendbar, z.B. dann, wenn sich die Substanz in einem versiegelten Behälter befindet und Messungen, deshalb immer auch Informationen über den Behälter enthalten.

Zur Vereinfachung des Ablesens der Informationen aus der spektralen Struktur liegt in der Praxis oft ein mathematisches Modell als Kennfeld vor, welches z.B. mittels der Methode der kleinsten Fehlerquadrate (engl. least squares, LS) mit der aufgenommenen spektralen Struktur verglichen wird. Für erschwerte Messbedingungen wie z.B. die Messung einer Substanz in einem versiegelten Behälter existieren Verfahren wie das aus der Patentschrift EP 2 108 115 B1 bekannte. Hier werden zusätzlich zum Kennfeld der spektralen Struktur auch Kennfelder für die spektralen Störstrukturen modelliert, die zusammen ein Ablesen der Informationen aus den Messungen vereinfachen. Diese Verfahren können zwar die Genauigkeit der abgelesenen Informationen verbessern, erfordern aber eine genaue Modellierung der Störstrukturen. Dies führt zum erheblichen Nachteil, dass unerwartete und nicht im Kennfeld vorgesehene Störstrukturen die Genauigkeit der abgelesenen Informationen stark reduzieren können. Unerwartete Störstrukturen können z.B. bei der zerstörungsfreien Untersuchung von einem Softdrink auftreten, welcher in einer versiegelten PET-Flasche aufgenommen ist.

Die Offenlegungsschrift US 5 121 337 A offenbart ein Verfahren zur kontaktlosen Charakterisierung einer Substanz mithilfe von elektromagnetischen Wellen, wobei die Substanz eine spektrale Struktur als Kennfeld aufweist, die qualitativ von mindestens einer Eigenschaft der Substanz abhängt, wobei die spektrale Struktur durch eine Messung aufgezeichnet wird und die Messung eine oder mehrere, von den Messumständen abhängige, Störspektren enthalten kann. Dabei werden mindestens zwei verschiedene Messungen unter unterschiedlichen Messumständen durchgeführt, die quantitativ und/oder qualitativ unterschiedliche Störspektren und ggf. quantitativ unterschiedliche spektrale Strukturen aufweisen können und es wird eine Korrekturmatrix gebildet, mit deren Hilfe korrigierte Spektren erzeugt werden, die keine Störstruktur mehr enthalten.

Die Patentschrift US 6 415 233 B1 betrifft ein Verfahren zur Messung des Druckes und der Konzentration eines Gases in einem geschlossenen Behälter. Zur Berücksichtigung des Behältereinflusses wird eine Hintergrundspektrendatenbank benutzt.

Es ist Aufgabe der vorliegenden Erfindung, ein verbessertes Verfahren zur kontaktlosen bzw. zerstörungsfreien Charakterisierung und/oder Untersuchung einer Substanz mithilfe von Wellen, insbesondere von elektromagnetischen Wellen, bereitzustellen. Insbesondere ist es Aufgabe der vorliegenden Erfindung, ein Verfahren zur Verfügung zu stellen, welches einfach und bequem ausgeführt werden kann und welches präzise und zuverlässige Ergebnisse bei der Charakterisierung und/oder Untersuchung der Substanz liefert. Das erfindungsgemäße Verfahren soll insbesondere zur Qualitätskontrolle von Getränken, vorzugsweise von kohlensäurehaltigen Getränken, die in versiegelten Behältern aufgenommen werden können, geeignet sein, um einen Druck und/oder eine Kohlensäurekonzentration von den Getränken zu ermitteln, vorzugsweise ohne die Behälter zu zerstören und/oder zu öffnen. Ferner ist es Aufgabe der vorliegenden Erfindung, ein entsprechendes Messgerät bereitzustellen. Weiterhin ist Aufgabe der vorliegenden Erfindung, ein entsprechendes Computer-Programm-Produkt zur Verfügung zu stellen.

Zur Lösung dieser Aufgabe wird ein Verfahren zur kontaktlosen bzw. zerstörungsfreien Charakterisierung und/oder Untersuchung einer Substanz mithilfe von Wellen, insbesondere von elektromagnetischen Wellen, mit den Merkmalen des unabhängigen Verfahrensanspruches, insbesondere aus dem kennzeichnenden Teil, vorgeschlagen. Ferner sieht die Erfindung zur Lösung der Aufgabe ein entsprechendes Messgerät mit den Merkmalen des unabhängigen Vorrichtungsanspruches, insbesondere aus dem kennzeichnenden Teil, vor. Weiterhin sieht die Erfindung ein entsprechendes Computer-Programm-Produkt nach dem unabhängigen Erzeugnisanspruch vor. Zudem sieht die Erfindung eine Verwendung eines entsprechenden Messgeräts nach dem unabhängigen Verwendungsanspruch vor. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Die Erfindung stellt ein Verfahren zur kontaktlosen (bzgl. der Substanz) bzw. zerstörungsfreien (bzgl. des Behälters) Charakterisierung (welche Substanz?) und/oder Untersuchung (welche Eigenschaften hat die Substanz?) einer Substanz bereit. Die Substanz kann bspw. in Form eines Gases vorliegen, welches sich z. B. über einem kohlensäurehaltigen Getränk in einem versiegelten Behälter befinden kann. Das erfindungsgemäße Verfahren wird kontaktlos bzgl. der Substanz durchgeführt, wobei es selbstverständlich denkbar ist, dass ein Messgerät den Behälter berühren kann. Das erfindungsgemäße Verfahren wird außerdem zerstörungsfrei bzgl. des Behälters, d. h. ohne Zerstörung und/oder ohne Öffnung des Behälters durchgeführt. Die Charakterisierung dient zum Bestimmen der Art der Substanz und die Untersuchung dient zum Ermitteln der Eigenschaften der Substanz.

Das Verfahren wird mithilfe von Wellen, vorzugsweise von elektromagnetischen Wellen, durchgeführt. Die Substanz weist dabei eine spektrale Struktur als Kennfeld auf, die qualitativ von mindestens einer Eigenschaft der Substanz abhängt. Unter einer Eigenschaft der Substanz ist eine chemische (Zusammensetzung) und/oder thermodynamische Eigenschaft (Druck, Konzentration) gemeint.

Die spektrale Struktur der Substanz wird durch eine Messung aufgezeichnet. Die Messung kann eine Störstruktur aufweisen, die von den Messumständen abhängt. Die Störstruktur kann z. B. durch die Form des Behälters, durch weitere Substanzen in der Messstrecke, durch die Messumstände und/oder durch die Quelle der Wellen verursacht werden. Die Messumstände können dabei durch unterschiedliche Messwinkel und/oder Positionen eines Messgeräts bezüglich des Behälters bestimmt werden, in welchem die Substanz aufgenommen ist, sodass unter unterschiedlichen Messumständen die Störstruktur sich quantitativ und/oder qualitativ und die spektrale Struktur sich quantitativ (z. B. durch Änderung der optischen Pfadlänge) verändern können. Die Messumstände bewirken, dass in einer Messung die spektrale Struktur der Substanz von der Störstruktur überlagert wird. Im Gegensatz zu der spektralen Struktur, die als Kennfeld vorliegt, ist für die Störstruktur keine Funktion bekannt.

Die Erfindung sieht vor, dass im Schritt 1) mindestens zwei verschiedene Messungen unter unterschiedlichen Messumständen durchgeführt werden, die quantitativ und/oder qualitativ unterschiedliche Störstrukturen und ggf. quantitativ unterschiedliche spektrale Strukturen aufweisen können, und dass im Schritt 2) Koeffizienten einer Linearkombination der verschiedenen Messungen und der Wert der mindestens einen Eigenschaft der Substanz optimiert werden, sodass die Abweichung zwischen der Linearkombination und der spektralen Struktur minimiert wird.

Die Erfindung sieht mit anderen Worten vor, dass im Schritt 1) beliebig viele, mindestens aber zwei verschiedene Messungen unter (bewusst) unterschiedlichen Messumständen vorgenommen werden, sodass die Informationen über die Substanz und die Informationen über die restlichen Einflussfaktoren, d. h. die Störstrukturen, verschieden stark in den einzelnen Messungen repräsentiert sind.

Die Erfindung schlägt somit ein Verfahren mit den Merkmalen des unabhängigen Verfahrensanspruches, insbesondere aus dem kennzeichnenden Teil vor, mit dem spektrale Störstrukturen ohne deren vorherige Modellierung präzise von den spektralen Strukturen der Substanz getrennt werden können. Das Verfahren kann als eine Erweiterung des oben dargestellten Verfahrens der Referenzmessung gesehen werden. Statt genau eine Referenzmessung und genau eine weitere Messung vorzunehmen, für die teilweise Informationen vorliegen, werden beliebig viele, mindestens aber zwei Messungen unter verschiedenen Messumständen vorgenommen, wobei für die Messungen keine Informationen vorliegen müssen. Messumstände können z.B. Messwinkel und/oder Messpositionen bezüglich der Substanz sein. Anschaulich dargestellt kann hierzu ein Benutzer ein Messgerät ähnlich wie einen Barcode-Scanner unter verschiedenen Positionen und Orientierungen an der Substanz vorbeiführen, bspw. im Bereich eines Flaschenkopfes, wenn ein kohlensäurehaltiges Getränk in einem versiegelten Behälter untersucht wird. In den so aufgenommenen Messungen sind Informationen über die Substanz sowie weitere Informationen z.B. über den Behälter jeweils unterschiedlich ausgeprägt. Da unbekannt ist welche Messungen welche Informationen enthalten, können nicht wie beim Verfahren der Referenzmessung gezielt einzelne Messungen für eine Subtraktion designiert werden.

Deshalb wird im nächsten Schritt des Verfahrens bestimmt, wie die Messungen miteinander subtrahiert werden können um eine spektrale Struktur der Substanz zu erhalten. Das Zielkriterium ist eine möglichst geringe Abweichung des Subtraktionsergebnisses vom Kennfeld der spektralen Struktur. Anders ausgedrückt werden die Koeffizienten einer Linearkombination der verschiedenen Messungen sowie die abgelesenen Informationen optimiert, sodass die Abweichung zwischen der Linearkombination und der spektralen Struktur minimiert wird. Nach der Optimierung gibt die abgelesene Information die tatsächliche Information mit hoher Genauigkeit wieder.

Der Erfindungsgedanke liegt darin, dass mit wachsender Anzahl an Messungen die spektrale Struktur der Substanz im Q-dimensionalen Vektorraum der Messungen von den Störstrukturen unterscheidbar sein wird, wobei Q die Anzahl der Messkanäle ist. Um die spektrale Struktur der Substanz zu bestimmen, kann im Schritt 2) zunächst ein relevanter Unterraum des Vektorraums gefunden werden, in dem sich die Messungen hauptsächlich abspielen. Der relevante Unterraum ist dabei maximal der Raum, der durch die Messvektoren selbst aufgespannt wird. Der Ansatz ist nun, die spektrale Struktur der Substanz in dem relevanten Unterraum mit Hilfe des Kennfelds für die spektrale Struktur der Substanz wiederzufinden. Dies geschieht mathematisch über die Bestimmung der Schnittmenge zwischen dem Kennfeld der spektralen Struktur der Substanz und dem relevanten Unterraum. Bspw. kann die Schnittmenge der spektralen Struktur der Substanz mithilfe von LS-Methoden mit der geringsten Distanz zu dem relevanten Unterraum bestimmt werden. Auf diese Weise kann die spektrale Struktur der Substanz aus den Messwerten wiederhergestellt werden. Wenn die spektrale Struktur der Substanz charakterisiert bzw. bestimmt wurde, kann aus der spektralen Struktur auf die zu ermittelnde Eigenschaft der Substanz zurückgeschlossen werden, wie z.B. auf den Druck und/oder die Kohlensäurekonzentration der Substanz, die bspw. in Form eines kohlensäurehaltigen Getränkes vorliegen kann.

Im oben beschriebenen Verfahren spannen die Messvektoren zwar den relevanten Unterraum auf, stellen aber insbesondere bei einer hohen Anzahl von Messungen keine zweckmäßige Basis für die Optimierung dar. Deshalb kann die Erfindung bei einem Verfahren zur kontaktlosen Charakterisierung einer Substanz vorsehen, dass im Schritt 2) zum, insbesondere mittelbaren, Optimieren der Koeffizienten einer Linearkombination der Messungen Koeffizienten einer Linearkombination von Singularvektoren optimiert werden, wobei die Singularvektoren Spalten einer Singularmatrix sind, wobei die Singularmatrix sich aus einer Singulärwertzerlegung einer Messdatenmatrix ergibt, und wobei die Messdatenmatrix in den Spalten die Messungen enthält. Somit kann im Schritt 2) eine Datenvorbereitung stattfinden, um die Optimierung im Sinne der Erfindung zu vereinfachen und die Rechenressourcen zu reduzieren.

Ferner kann die Erfindung bei einem Verfahren zur kontaktlosen Charakterisierung einer Substanz vorsehen, dass die mindestens zwei verschiedenen Messungen unter unterschiedlichen Messwinkeln und/oder Positionen bezüglich eines Behälters, in dem sich die Substanz befindet, durchgeführt werden. Somit kann der Vorteil erreicht werden, dass das Verfahren einfach und bequem ausgeführt werden kann. Hierzu kann ein Benutzer ein Messgerät ähnlich wie einen Barcode-Scanner unter verschiedenen Positionen und Orientierungen an der Substanz vorbeiführen, bspw. im Bereich eines Flaschenkopfes, wenn ein kohlensäurehaltiges Getränk in einem versiegelten Behälter untersucht wird. Im Gegensatz zu bekannten Verfahren, bei denen das Messgerät für eine bestimmte Zeit, bspw. mind. für 10 s, nicht bewegt werden darf, kann das Messgerät im Sinne der Erfindung einfach und bequem bewegt werden. Dies erscheint wie ein absichtliches Verrauschen der Messungen. Die hierdurch entstandene Varianz führt jedoch zusammen mit dem erfindungsgemäßen Verfahren letztendlich zu erheblich genaueren Messwerten als in bekannten Verfahren.

Weiterhin kann die Erfindung bei einem Verfahren zur kontaktlosen Charakterisierung einer Substanz vorsehen, dass die mindestens zwei verschiedenen Messungen unter unterschiedlichen Messwinkeln und/oder Positionen bezüglich eines Flaschenkopfes einer Flasche durchgeführt werden, die ein kohlensäurehaltiges Getränk aufnimmt, wobei die Substanz einen Inhalt des Flaschenkopfes der Flasche über dem kohlensäurehaltigen Getränk in der Flasche bildet. Somit kann der Inhalt der Flasche über dem kohlensäurehaltigen Getränk charakterisiert und/oder untersucht werden. Über dem kohlensäurehaltigen Getränk bildet sich ein Gas, welches sich im Normalzustand bzw. bei einer versiegelten Flasche im thermodynamischen Gleichgewicht zum kohlensäurehaltigen Getränk befindet. Wenn das Gas also charakterisiert wurde, kann auf den Druck und/oder die Kohlensäurekonzentration des Gases und mithin des kohlensäurehaltigen Getränkes geschlossen werden. Zur Charakterisierung des Gases können vorzugsweise elektromagnetische Wellen benutzt werden, die durch Absorption im Gas die Moleküle des Gases zum Schwingen und/oder zum Rotieren bringen können. Die elektromagnetischen Wellen können dabei eine Wellenlänge zwischen 800 nm und 16 $\mu$m, bspw. ca. 2400 nm, aufweisen.

Des Weiteren kann die Erfindung bei einem Verfahren zur kontaktlosen Charakterisierung einer Substanz vorsehen, dass im Schritt 1) eine Vielzahl an Messungen, vorzugsweise bis zu 80 Messungen, unter unterschiedlichen Messumständen durchgeführt wird. Auf diese Weise kann der Q-dimensionale Vektorraum mit bis zu 80 Messungen gefüllt werden, durch die ein geeigneter Unterraum gefunden werden kann, um die Substanz zu charakterisieren.

Zudem kann die Erfindung bei einem Verfahren zur kontaktlosen Charakterisierung einer Substanz vorsehen, dass im Schritt 1) eine Vielzahl an Messungen über eine Zeitspanne von bis zu 5 Sek., vorzugsweise 10 Sek., bevorzugt 20 Sek., durchgeführt wird. Auf diese Weise kann sichergestellt werden, dass eine ausreichende Anzahl an Messungen aufgenommen wird, die in jedem Falle Messungen umfasst, die Informationen über die Substanz enthalten.

Außerdem kann die Erfindung bei einem Verfahren zur kontaktlosen Charakterisierung einer Substanz vorsehen, dass im Schritt 1) die mindestens zwei verschiedenen Messungen mithilfe von elektromagnetischen Wellen mit einer Wellenlänge zwischen 800 nm und 16 $\mu$m, insbesondere ca. 2400 nm, durchgeführt werden. Somit kann zum Durchführen des erfindungsgemäßen Verfahrens ein einfaches Lasermessgerät, bspw. in Form einer Laserdiode, verwendet werden. Die ungefähr passende Wellenlänge kann vorteilhafterweise mithilfe des Kennfeldes ausgesucht werden, wenn es bekannt ist, um welche Substanz es sich handeln kann und/oder welche Eigenschaften die Substanz ungefähr haben kann. Bei Haltbarkeitsüberprüfung eines kohlensäurehaltigen Getränkes, weiß man z. B. welcher Druck und/oder welche Kohlensäurekonzentration einem haltbaren Getränk zugeordnet werden kann. Für unterschiedliche Werte des Drucks und/oder der Kohlensäurekonzentration weist das Kennfeld unterschiedliche spektrale Strukturen für die Substanz auf. Somit kann eine ungefähr passende Wellenlänge ausgesucht werden, um die Substanz mithilfe des erfindungsgemäßen Verfahrens zu untersuchen. Schließlich findet sich die richtige spektrale Struktur für die Substanz als Schnittmenge mit dem relevanten Unterraum der Messungen. Die gefundene spektrale Struktur für die Substanz entspricht einem bestimmten Druck und/oder einer bestimmten Konzentration, die nun im Sinne der Erfindung ermittelt sind.

Ferner kann die Erfindung bei einem Verfahren zur kontaktlosen Charakterisierung einer Substanz vorsehen, dass im Schritt 1) die mindestens zwei verschiedenen Messungen mithilfe eines optischen Verfahrens, insbesondere mithilfe eines spektroskopischen Verfahrens, vorzugsweise eines absorptionsspektroskopischen Verfahrens, bevorzugt eines rovibrationalen spektroskopischen Verfahrens, durchgeführt werden. Insbesondere bei der Charakterisierung einer Substanz in Form eines kohlensäurehaltigen Getränkes, das sich in einem versiegelten Behälter befindet, kann ein solches spektroskopisches Verfahren vorteilhaft sein, um ein Absorptionsspektrum eines Gases über dem kohlensäurehaltigen Getränk zu generieren. Grundsätzlich ist aber auch denkbar, dass das Verfahren mithilfe von akustischen Wellen durchgeführt werden kann.

Weiterhin ist es denkbar, dass im Schritt 1) die mindestens zwei verschiedenen Messungen mithilfe eines Lasermessgeräts, insbesondere einer Laserdiode, durchgeführt werden. Ein Lasermessgerät, insbesondere in Form einer Laserdiode, ist ein einfach handhabbares und kostengünstiges Messgerät, welches beim Durchführen des erfindungsgemäßen Verfahrens verbesserte Messergebnisse liefern kann.

Des Weiteren kann die Erfindung bei einem Verfahren zur kontaktlosen Charakterisierung einer Substanz vorsehen, dass im Schritt 2) zum, insbesondere mittelbaren, Optimieren der Koeffizienten einer Linearkombination der Messungen Koeffizienten einer Linearkombination von Singularvektoren optimiert werden, wobei die Singularvektoren Spalten einer Singularmatrix sind, wobei die Singularmatrix sich aus einer Singulärwertzerlegung einer Messdatenmatrix ergibt, und wobei die Messdatenmatrix in den Spalten die Messungen enthält. Somit kann im Schritt 2) eine Datenvorbereitung stattfinden, um die Optimierung im Sinne der Erfindung zu vereinfachen und die Rechenressourcen zu reduzieren.

Zudem kann die Erfindung bei einem Verfahren zur kontaktlosen Charakterisierung einer Substanz vorsehen, dass in einem Schritt 3) durch die spektrale Struktur, deren Abweichung von der Linearkombination der verschiedenen Messungen minimiert ist, der Wert der mindestens einen Eigenschaft der Substanz ermittelt wird, wobei insbesondere der Wert der mindestens einen Eigenschaft der Substanz einen Druck und/oder eine Kohlensäurekonzentration eines kohlensäurehaltigen Getränkes bildet. Auf diese Weise können die interessanten und/oder wesentlichen Eigenschaften der Substanz ermittelt werden. Mithilfe von solchen Eigenschaften können die Qualität, die Haltbarkeit und/oder das Ablaufdatum der Substanz bestimmt werden. Somit kann das erfindungsgemäße Verfahren zur Qualitätskontrolle von Lebensmitteln, insbesondere von Getränken, vorzugsweise von kohlensäurehaltigen Getränken durchgeführt werden.

Außerdem kann die Erfindung bei einem Verfahren zur kontaktlosen Charakterisierung einer Substanz vorsehen, dass in einem Schritt 4) mithilfe der spektralen Struktur, deren Abweichung von der Linearkombination der verschiedenen Messungen minimiert ist, ein Kennfeld für die spektrale Struktur aktualisiert wird. Auf diese Weise kann das Kennfeld stets aktuell gehalten werden, was zur Verbesserung von zukünftigen Untersuchungen beitragen kann.

Ferner wird die erfindungsgemäße Aufgabe durch ein Messgerät zur kontaktlosen Charakterisierung einer Substanz mithilfe von Wellen, insbesondere von elektromagnetischen Wellen, gelöst. Hierzu ist es erfindungsgemäß vorgesehen, dass das Messgerät speziell zum Ausführen des erfindungsgemäßen Verfahrens ausgebildet ist, welches wie oben beschrieben ablaufen kann. Mithilfe des erfindungsgemäßen Messgeräts werden die gleichen Vorteile erreicht, die oben im Zusammenhang mit dem erfindungsgemäßen Verfahren beschrieben wurden. Auf diese Vorteile wird vorliegend vollumfänglich Bezug genommen.

Im Rahmen der Erfindung ist es denkbar, dass das Messgerät eine Rechnereinheit aufweisen kann, die dazu ausgeführt ist, die Koeffizienten einer Linearkombination der verschiedenen Messungen und den Wert der mindestens einen Eigenschaft der Substanz zu optimieren, um die Abweichung zwischen der Linearkombination und der spektralen Struktur zu minimieren. Somit kann präzise bestimmt werden, um welche Substanz es sich handelt.

Zudem oder stattdessen ist es denkbar, dass das Messgerät eine Rechnereinheit aufweisen kann, die dazu ausgeführt ist, zum, insbesondere mittelbaren, Optimieren der Koeffizienten einer Linearkombination der Messungen Koeffizienten einer Linearkombination von Singularvektoren zu optimieren, wobei die Singularvektoren Spalten einer Singularmatrix sind, wobei die Singularmatrix sich aus einer Singulärwertzerlegung einer Messdatenmatrix ergibt, und wobei die Messdatenmatrix in den Spalten die Messungen enthält. Somit kann die Rechenleistung zum Durchführen des erfindungsgemäßen Verfahrens reduziert werden. Zugleich kann somit eine hohe Genauigkeit der Untersuchung sichergestellt werden.

Vorteilhafterweise kann das Messgerät eine Anzeigeeinheit aufweisen, die dazu ausgeführt ist, die spektrale Struktur, deren Abweichung von der Linearkombination der verschiedenen Messungen minimiert ist, und/oder den ermittelten Wert der mindestens einen Eigenschaft der Substanz darzustellen. Folglich kann die Bedienung des Messgeräts mit einem hohen Komfort und beinahe intuitiv, sogar von einem ungeschulten Benutzer, erfolgen.

Weiterhin wird die erfindungsgemäße Aufgabe durch ein Computer-Programm-Produkt gelöst, welches in einem Speicher eines Messgeräts hinterlegbar ist, welches wie oben beschrieben ausgeführt sein kann, und welches bei einer zumindest teilweisen Ausführung in einer Rechnereinheit des Messgeräts ein Verfahren durchführen kann, welches wie oben beschrieben ablaufen kann. Mithilfe des erfindungsgemäßen Computer-Programm-Produkts werden die gleichen Vorteile erreicht, die oben im Zusammenhang mit dem erfindungsgemäßen Verfahren und/oder dem erfindungsgemäßen Messgerät beschrieben wurden. Auf diese Vorteile wird vorliegend vollumfänglich Bezug genommen.

Die Erfindung sieht des Weiteren eine Verwendung eines Messgeräts, welches wie oben beschrieben ausgeführt sein kann, zur Qualitätskontrolle von Getränken, vorzugsweise von kohlensäurehaltigen Getränken vor, um einen Druck und/oder eine Kohlensäurekonzentration von Getränken, vorzugsweise von kohlensäurehaltigen Getränken zu ermitteln. Grundsätzlich ist jedoch mithilfe des erfindungsgemäßen Messgeräts eine Qualitätskontrolle von Lebensmitteln aller Art denkbar.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur einen beschreibenden Charakter haben und nicht dazu gedacht sind, die Erfindung in irgendeiner Form einzuschränken. Es zeigen:

Fig. 1     einen schematischen Aufbau zur kontaktlosen Charakterisierung einer Substanz mithilfe von Wellen im Sinne der Erfindung,

Fig. 2     spektrale Strukturen, die mithilfe des Aufbaus gemäß Figur 1 erhalten wurden,

Fig. 3     ein beispielhaftes Kennfeld für eine spektrale Struktur in Abhängigkeit von einer Eigenschaft der Substanz,

Fig. 4     einen schematischen Aufbau zur kontaktlosen Charakterisierung einer Substanz mithilfe von Wellen nach dem Stand der Technik,

Fig. 5     spektrale Strukturen, die mithilfe des Aufbaus gemäß Figur 4 erhalten wurden,

Fig. 6     eine spektrale Struktur der Substanz, die nach dem Stand der Technik gemäß den Figuren 4 und 5 erhalten wurde,

Fig. 7     einen schematischen Aufbau zur kontaktlosen Charakterisierung einer Substanz mithilfe von Wellen im Sinne der Erfindung,

Fig. 8     spektrale Strukturen, die mithilfe des Aufbaus gemäß Figur 7 erhalten wurden,

Fig. 9     eine spektrale Struktur der Substanz, die mithilfe der Erfindung gemäß den Figuren 7 und 8 erhalten wurde, und

Fig. 10     eine schematische Darstellung eines Messgeräts im Sinne der Erfindung bei einem möglichen Verwendungsfall des Messgeräts.

In den unterschiedlichen Figuren sind gleiche Merkmale der Erfindung stets mit denselben Bezugszeichen versehen, weshalb diese in der Regel nur einmal beschrieben werden.

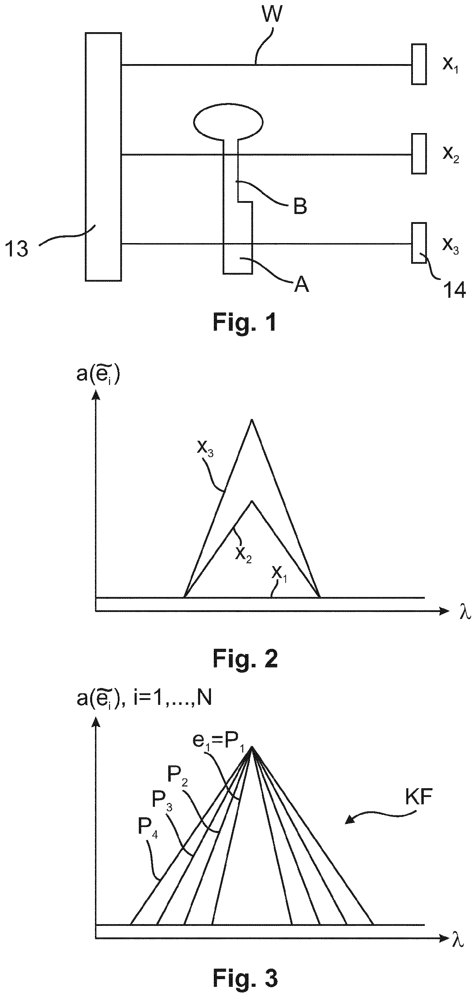

Die Figur 1 zeigt einen schematischen Aufbau zur kontaktlosen Charakterisierung einer Substanz A mithilfe von Wellen W im Sinne der Erfindung in einem Idealfall. Mithilfe des gezeigten schematischen Aufbaus, aufweisend ein Sendeelement 13 und ein Empfangselement 14, wird ein spektrales Verfahren durchgeführt. Mithilfe des spektralen Verfahrens wird eine spektrale Struktur $a(\tilde{e}_i)$ der Substanz A aufgenommen, bspw. in Form eines Absorptionsspektrums.

Die Figuren 1 und 2 zeigen beispielsweise drei Messungen x1, x2, x3 und entsprechend drei spektrale Strukturen $a(\tilde{e}_1)$, $a(\tilde{e}_2)$, $a(\tilde{e}_3)$ für die Messungen x1, x2, x3 in Abhängigkeit von einer Wellenlänge $\lambda$. Die Messung x1 dient zumeist als eine Vergleichsmessung für die Umgebung der Substanz A.

In der Figur 3 ist ferner ein beispielhaftes Kennfeld KF gezeigt. Anhand der Figur 3 ist ersichtlich, dass die spektrale Struktur $a(\tilde{e}_i)$ qualitativ von mindestens einer Eigenschaft $e_i$ der Substanz A abhängt. Um die Substanz A zu charakterisieren, wird eine Schnittmenge zwischen den Messungen x1, x2, x3 und dem Kennfeld KF gesucht. Eine spektrale Struktur $a(\tilde{e}_i)$ aus dem Kennfeld KF passt zumindest annähernd zu einer der Messungen x1, x2, x3. Diese spektrale Struktur $a(\tilde{e}_i)$ wird als Messergebnis ausgewählt. Anhand dieser ausgewählten spektralen Struktur $a(\tilde{e}_i)$ wird außerdem die Eigenschaft $e_i$ der Substanz A ermittelt, wie z. B. der Druck e1 = P1, P2 oder P3.

Die Figuren 1 bis 3 zeigen jedoch einen Idealfall. Im Normalfall hängt die Substanz, insbesondere, wenn sie gasförmig oder flüssig ist, nicht frei im Raum.

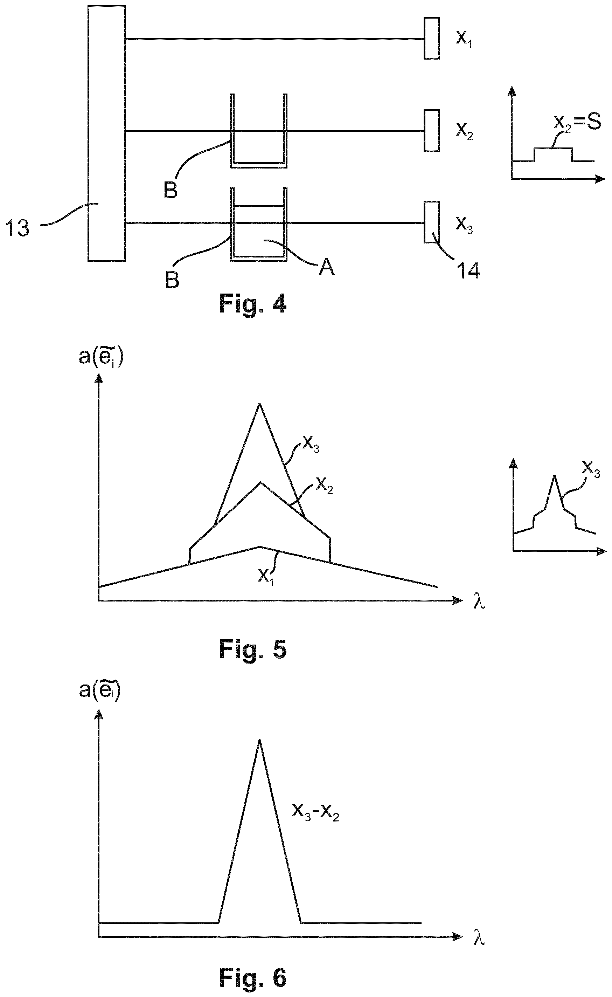

Wie es die Figur 4 zum Stand der Technik zeigt, wird eine gasförmige oder flüssige Substanz zumeist in einem Behälter B aufgenommen.

Bei bekannten Verfahren, die mithilfe von Figuren 4, 5 und 6 erklärt werden, werden üblicherweise Referenz- oder Hintergrundspektren von dem Behälter B aufgenommen (siehe Messung x2), in welchem später die Substanz A untersucht wird (siehe Messung x3). Auch hier kann eine Messung x1 als Referenzmessung für die Umgebung der Substanz A oder für die Quelle der Wellen (W) dienen. Die spektralen Strukturen $a(\tilde{e}_1)$, $a(\tilde{e}_2)$, $a(\tilde{e}_3)$ für die Messungen x1, x2, x3 sind in der Figur 5 gezeigt. Bekannte Referenz- oder Hintergrundspektren des Behälters B werden mithilfe von mathematischen Methoden aus dem eigentlichen Spektrum der Substanz herausgefiltert, wie es die Figur 6 andeutet, um den Einfluss des Behälters B bei der Untersuchung der Substanz A als eine bekannte Störstruktur s zu entfernen.

Wie es die Figur 4 weiterhin andeutet, werden die Messungen x2 und x3 möglichst unter gleichen Messumständen aufgenommen, bspw. auf gleicher Position bzgl. des Behälters B.

Bei vielen Lebensmitteln, die in versiegelten Behältern B aufgenommen sind, wie z. B. von Softdrinks, sind solche Verfahren, wie es in den Figuren 4 bis 6 gezeigt ist, jedoch nicht anwendbar. Die Störstrukturen $s_i$ sind bei solchen Untersuchungen unbekannt und können nicht ohne Zerstörung des Behälters B bestimmt werden. Die unbekannten Störstrukturen $s_i$ können von unbekannter Behältergeometrie, Interferenzerscheinungen oder Auswirkungen von Fremdphasen in der Messstrecke zwischen dem Sendeelement 13 und dem Empfangselement 14 herkommen.

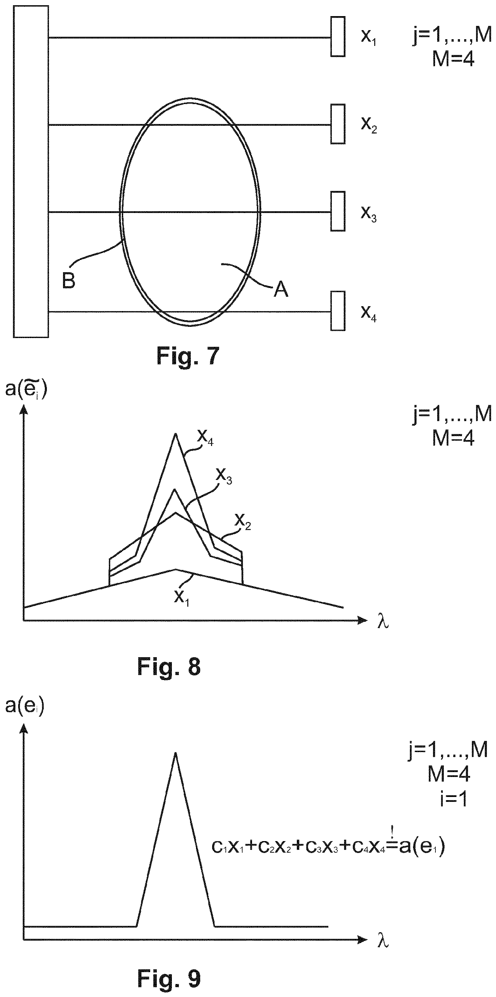

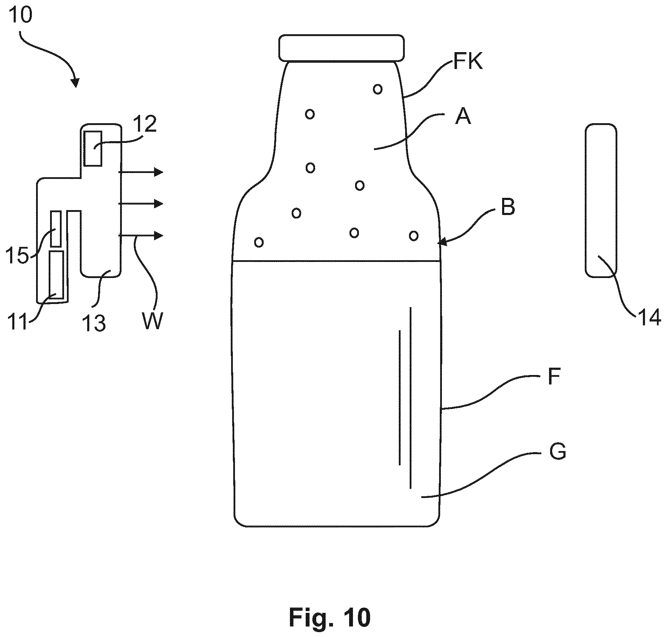

Die Erfindung stellt ein verbessertes Verfahren zur kontaktlosen bzw. zerstörungsfreien Charakterisierung und/oder Untersuchung einer Substanz A mithilfe von Wellen W, insbesondere von elektromagnetischen Wellen, zur Verfügung, welches anhand der Figuren 7 bis 9 und 10 erklärt wird. Das erfindungsgemäße Verfahren soll insbesondere zur Qualitätskontrolle von Lebensmitteln, wie z. B. Getränken G, vorzugsweise von kohlensäurehaltigen Getränken G, die in versiegelten Behältern B aufgenommen werden können, geeignet sein. Mithilfe des erfindungsgemäßen Verfahrens kann außerdem der Druck P und/oder eine Kohlensäurekonzentration von den Getränken G ermittelt werden, vorzugsweise ohne die Behälter B zu zerstören und/oder zu öffnen (vgl. die Figur 10).

Die Substanz A weist eine spektrale Struktur $a(\tilde{e}_i)$ als Kennfeld KF auf, die qualitativ von mindestens einer Eigenschaft $e_i$ der Substanz A abhängt, wie es oben beispielhaft in der Figur 3 gezeigt ist.

Die spektrale Struktur $a(\tilde{e}_i)$ der Substanz A wird durch eine Messung $x_j$ aufgezeichnet (vgl. die Figuren 7 und 8). Die Messung $x_j$ kann dabei eine unbekannte Störstruktur $s_j$ aufweisen, die von den Messumständen abhängt. Unter unterschiedlichen Messumständen kann die Störstruktur $s_j$ sich quantitativ und/oder qualitativ und die spektrale Struktur $a(\tilde{e}_i)$ sich quantitativ (z. B. durch Änderung der optischen Pfadlänge) ändern:

$$x_1 = g_1 \cdot a + s_1$$

$$x_2 = g_2 \cdot a + s_2 \text{,}$$

wobei eine ausschließlich quantitative Änderung der Störstruktur $s_j$

$$s_j = h_j \cdot s$$

nicht mit einer identisch ausgeprägten Änderung der spektralen Struktur $a(\tilde{e}_i)$ (also jeweils $h_j = g_j$) in X einhergehen darf.

Qualitative Änderung bedeutet dabei, dass:

$$a(e_i) \neq e_i g a_{const}.$$

Die Erfindung sieht vor, dass im Schritt 1) mindestens zwei verschiedene Messungen $x_j$ unter unterschiedlichen Messumständen durchgeführt werden (vgl.

die Figuren 7 und 8), die quantitativ und/oder qualitativ unterschiedliche Störstrukturen s_j und/oder quantitativ unterschiedliche spektrale Strukturen a(e;) aufweisen können, und dass im Schritt 2) Koeffizienten $c_j$ einer

$$\sum_{j=1}^{M} c_j x_j$$

Linearkombination der verschiedenen Messungen $x_j$ und der Wert $\tilde{e}_i$ der mindestens einen Eigenschaft $e_i$ der Substanz A optimiert werden, sodass die Abweichung zwischen der Linearkombination

$$\sum_{j=1}^{M} c_j x_j$$

und der spektralen Struktur $a(\tilde{e}_i)$ minimiert wird (vgl. die Figur 9).

Wie es in der Figur 7 mithilfe von vier Messungen (M=4) angedeutet ist, werden im Schritt 1) beliebig viele (vorzugsweise bis zu 80 Messungen), mindestens aber zwei verschiedene Messungen $x_j$ unter (bewusst) unterschiedlichen Messumständen vorgenommen. Im Sinne der Erfindung wird mit wachsender Anzahl M an Messungen $x_j$ die spektrale Struktur $a(\tilde{e}_i)$ der Substanz A in einem Q-dimensionalen Vektorraum von den Störstrukturen $s_j$ unterscheidbar sein.

Um die spektrale Struktur $a(\tilde{e}_i)$ der Substanz A zu bestimmen, kann im Schritt 2) zunächst ein relevanter Unterraum in dem Q-dimensionalen Vektorraum V gefunden werden, in dem sich die Messungen $x_j$ hauptsächlich abspielen. Der relevante Unterraum $V_x$ ist dabei maximal der Raum, der durch die Messvektoren $x_j$, j=1, ..., M selbst aufgespannt wird. Der Ansatz ist nun, die spektrale Struktur $a(\tilde{e}_i)$ der Substanz A in dem relevanten Unterraum $V_x$ mit Hilfe des Kennfelds KF für die spektrale Struktur $a(\tilde{e}_i)$ der Substanz A wiederzufinden. Dies geschieht mathematisch über die Bestimmung der Schnittmenge zwischen der spektralen Struktur $a(\tilde{e}_i)$ der Substanz A und diesem relevanten Unterraum $V_x$. Bspw. kann die Schnittmenge der spektralen Struktur $a(\tilde{e}_i)$ der Substanz A mithilfe von LS-Methoden mit der geringsten Distanz zum relevanten Unterraum $V_x$ bestimmt werden. Auf diese Weise kann die spektrale Struktur $a(\tilde{e}_i)$ der Substanz A aus den Messwerten wiederhergestellt werden. Wenn die spektrale Struktur $a(\tilde{e}_i)$ der Substanz A charakterisiert wurde, kann aus der spektralen Struktur $a(\tilde{e}_i)$ der Substanz A auf die zu ermittelnde Eigenschaft $e_i$ der Substanz A zurückgeschlossen werden, wie z. B. auf den Druck P und/oder die Kohlensäurekonzentration der Substanz A, die bspw. in Form eines kohlensäurehaltigen Getränkes G vorliegen kann.

Mit anderen Worten können im Schritt 2) zum, insbesondere mittelbaren, Optimieren der Koeffizienten $c_j$ einer Linearkombination $c_j x_j$ der Messungen $x_j$ Koeffizienten $(d_h)$ einer Linearkombination

$$\sum_{h=1}^{K} d_h u_h$$

von Singularvektoren $u_h$ optimiert werden, wobei die Singularvektoren $u_h$ Spalten einer Singularmatrix U sind.

$$U = \begin{pmatrix} u_{11} & \cdots & u_{K1} & \cdots & u_{M1} \\ \cdots & \cdots & \cdots & \cdots & \cdots \\ \cdots & \cdots & \cdots & \cdots & \cdots \\ u_{1Q} & \cdots & u_{KQ} & \cdots & u_{MQ} \end{pmatrix},$$

wobei die Singularmatrix U sich aus einer Singulärwertzerlegung SVD ($X = U\Sigma V^T$) einer Messdatenmatrix X ergibt:

$$X = \begin{pmatrix} x_{11} & \cdots & x_{M1} \\ \cdots & \cdots & \cdots \\ x_{1Q} & \cdots & x_{MQ} \end{pmatrix}$$

und wobei die Messdatenmatrix X in den Spalten die Messungen $x_j$ enthält.

Mithilfe des erfindungsgemäßen Verfahrens kann zudem das Kennfeld KF aktualisiert werden.

Wie es ferner die Figur 10 zeigt, können die mindestens zwei verschiedenen Messungen $x_j$ aus dem Schritt 1) im Bereich eines Flaschenkopfes FK einer Flasche F durchgeführt werden, die ein kohlensäurehaltiges Getränk G aufnimmt, wobei die Substanz A einen Inhalt des Flaschenkopfes FK der Flasche F über dem kohlensäurehaltigen Getränk F in der Flasche F bildet. Über dem kohlensäurehaltigen Getränk G bildet sich ein Gas, welches sich im Normalzustand bei einer versiegelten Flasche F im thermodynamischen Gleichgewicht zum kohlensäurehaltigen Getränk G befindet. Wenn das Gas als Substanz A also charakterisiert wurde, kann auf den Druck P und/oder die Kohlensäurekonzentration des Gases und mithin des kohlensäurehaltigen Getränkes G geschlossen werden.

Die Figur 10 zeigt weiterhin, dass ein Benutzer ein Messgerät 10 im Sinne der Erfindung ähnlich wie einen Barcode-Scanner an der Substanz A halten oder vorbeiführen kann, bspw. im Bereich eines Flaschenkopfes FK, wenn ein kohlensäurehaltiges Getränk G in einem versiegelten Behälter B untersucht wird. Das Messgerät 10 kann dabei in Form eines Lasermessgeräts, insbesondere einer Laserdiode, ausgebildet sein.

Im Gegensatz zu bekannten Verfahren, bei denen das Messgerät für eine bestimmte Zeit, bspw. mind. für 10s, nicht bewegt werden darf, kann das Messgerät 10 im Sinne der Erfindung einfacher und bequemer gehandhabt werden.

Im Rahmen der Erfindung ist es denkbar, dass im Schritt 1) eine Vielzahl an Messungen $x_j$ über eine Zeitspanne von bis zu 5 Sek., vorzugsweise 10 Sek., bevorzugt 20 Sek., durchgeführt wird.

Die mindestens zwei verschiedenen Messungen $x_j$ können bspw. mithilfe von elektromagnetischen Wellen, z. B. mit einer Wellenlänge $\lambda$ zwischen 800 nm und 16 $\mu$m, insbesondere ca. 2400 nm, durchgeführt werden.

Die mindestens zwei verschiedenen Messungen $x_j$ können weiterhin mithilfe eines optischen Verfahrens, insbesondere mithilfe eines spektroskopischen Verfahrens, vorzugsweise eines absorptionsspektroskopischen Verfahrens, bevorzugt eines rovibrationalen spektroskopischen Verfahrens, durchgeführt werden.

Das Messgerät 10 kann eine Rechnereinheit 11 aufweisen, die dazu ausgeführt ist, das erfindungsgemäße Verfahren auszuführen, insbesondere die Optimierungen im Sinne des erfindungsgemäßen Verfahrens auszuführen, um die Substanz A zu charakterisieren.

Vorteilhafterweise kann das Messgerät 10 eine Anzeigeeinheit 12 aufweisen, um die charakterisierte spektrale Struktur $a(\tilde{e}_i)$, deren Abweichung von der Linearkombination $\sum_{j=1}^{M} c_j x_j$ der verschiedenen Messungen $x_j$ minimiert ist, und/oder den ermittelten Wert $\tilde{e}_i$ der mindestens einen Eigenschaft $e_i$ der Substanz A zu veranschaulichen. Die Anzeigeeinheit 12 kann weiterhin dazu genutzt werden, um Botschaften, wie haltbar, abgelaufen oder Ähnliches anzuzeigen.

Weiterhin stellt ein Computer-Programm-Produkt einen weiteren Aspekt der Erfindung dar. Das Computer-Programm-Produkt ist in einem Speicher 15 des Messgeräts 10 hinterlegbar und kann bei einer zumindest teilweisen Ausführung in der Rechnereinheit 11 des Messgeräts 10 das erfindungsgemäße Verfahren durchführen.

Das erfindungsgemäße Messgerät 10 kann vorteilhafterweise zur Qualitätskontrolle von Lebensmitteln jeder Art, wie z. B. von Getränken G, vorzugsweise von kohlensäurehaltigen Getränken G verwendet werden, um einen Druck P und/oder eine Kohlensäurekonzentration von Getränken G, vorzugsweise von kohlensäurehaltigen Getränken G zu ermitteln.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen. Der Schutzumfang der Erfindung wird durch die Ansprüche definiert.

**Bezugszeichenliste**

A      Substanz
B      Behälter
F      Flasche
FK      Flaschenkopf
G      Getränk
$e_i$      Eigenschaften der Substanz
$e_1$      Eigenschaften der Substanz
$\tilde{e}_i$      Wert der Eigenschaft
P      Druck

P1      Druck
P2      Druck
P3      Druck
Pi      Druck
N      Anzahl der Eigenschaften
KF      Kennfeld
x      Messung
$x_1$      Messung
$x_2$      Messung
$x_3$      Messung
$x_j$      verschiedene Messungen
M      Anzahl an Messungen
$a(\tilde{e}_i)$      spektrale Struktur
$g_1 \cdot a$      spektrale Struktur
$g_2 \cdot a$      spektrale Struktur
$g_j \cdot a$      quantitativ unterschiedliche spektrale Strukturen
s      Störstruktur
$s_1$      Störstruktur
$s_2$      Störstruktur
$s_j$      quantitativ und/oder qualitativ unterschiedliche Störstrukturen
$c_j$      Koeffizienten
$\sum_{j=1}^{M} c_j x_j$      Linearkombination der verschiedenen Messungen
K      Anzahl genutzter Singularvektoren
$d_h$      Koeffizienten
$u_h$      Singularvektoren
$\sum_{h=1}^{K} d_h u_h$      Linearkombination der Singularvektoren
X      Messdatenmatrix
Q      Anzahl spektraler Kanäle
SVD      Singulärwertzerlegung
V      Vektorraum
$V_x$      Unterraum
W      Wellen
$\lambda$      Wellenlänge
10      Messgerät
11      Rechnereinheit
12      Anzeigeeinheit
13      Sendeelement
14      Empfangselement
15      Speicher

**Patentansprüche**

1. Verfahren zur kontaktlosen Charakterisierung einer Substanz (A) mithilfe von Wellen (W),

    wobei die Substanz (A) eine spektrale Struktur $(a(\tilde{e}_i))$ als Kennfeld (KF) aufweist, die qualitativ von mindestens einer Eigenschaft ($e_i$) der Sub-

stanz (A) abhängt,

wobei die spektrale Struktur (a($\tilde{e}_i$)) durch mindestens zwei verschiedene Messungen ($x_j$) aufgezeichnet wird,

und wobei die mindestens zwei verschiedenen Messungen ($x_j$) Störstrukturen ($s_j$) aufweisen, die von den Messumständen abhängen,

wobei in einem Schritt 1) die mindestens zwei verschiedenen Messungen ($x_j$) unter unterschiedlichen Messumständen durchgeführt eiwerden, die quantitativ und/oder qualitativ unterschiedliche Störstrukturen ($s_j$) und gegebenenfalls quantitativ unterschiedliche spektrale Strukturen ($g_j \cdot a$) aufweisen,

und in einem Schritt 2) Koeffizienten ($c_j$) einer

$$\sum_{j=1}^{M} c_j x_j$$

Linearkombination ( ) der verschiedenen Messungen ($x_j$) und der Wert ($\tilde{e}_i$) der mindestens einen Eigenschaft ($e_i$) der Substanz (A) optimiert werden, sodass die Abweichung zwi-

$$\sum_{i=1}^{M} c_j x_j$$

schen der Linearkombination ( ) und der spektralen Struktur (a($\tilde{e}_i$)) minimiert wird.

2. Verfahren nach Anspruch 1,
   **dadurch gekennzeichnet,**
   **dass** die mindestens zwei verschiedenen Messungen ($x_j$) unter unterschiedlichen Messwinkeln und/oder Positionen bezüglich eines Behälters, in dem sich die Substanz (A) befindet, durchgeführt werden.

3. Verfahren nach Anspruch 1 oder 2,
   **dadurch gekennzeichnet,**
   **dass** die mindestens zwei verschiedenen Messungen ($x_j$) unter unterschiedlichen Messwinkeln und/oder Positionen bezüglich eines Flaschenkopfes (FK) einer Flasche (F) durchgeführt werden, die ein kohlensäurehaltiges Getränk (G) aufnimmt, wobei die Substanz (A) einen Inhalt des Flaschenkopfes (FK) der Flasche (F) über dem kohlensäurehaltigen Getränk (G) in der Flasche (F) bildet.

4. Verfahren nach einem der vorhergehenden Ansprüche,
   **dadurch gekennzeichnet,**
   **dass** im Schritt 1) eine Vielzahl (M) an Messungen ($x_j$), vorzugsweise bis zu 80 Messungen ($x_j$), unter unterschiedlichen Messumständen durchgeführt wird, und/oder dass im Schritt 1) eine Vielzahl (M) an Messungen ($x_j$) über eine Zeitspanne von bis zu 5 Sek., vorzugsweise 10 Sek., bevorzugt 20 Sek., durchgeführt wird.

5. Verfahren nach einem der vorhergehenden Ansprüche,

**dadurch gekennzeichnet,**

**dass** im Schritt 1) die mindestens zwei verschiedenen Messungen ($x_j$) mithilfe von elektromagnetischen Wellen mit einer Wellenlänge ($\lambda$) zwischen 800 nm und 16 $\mu$m, insbesondere ca. 2400 nm, durchgeführt werden,
und/oder dass im Schritt 1) die mindestens zwei verschiedenen Messungen ($x_j$) mithilfe eines optischen Verfahrens, insbesondere mithilfe eines spektroskopischen Verfahrens, vorzugsweise eines absorptionsspektroskopischen Verfahrens, bevorzugt eines rovibrationalen spektroskopischen Verfahrens, durchgeführt werden.

6. Verfahren nach einem der vorhergehenden Ansprüche,
   **dadurch gekennzeichnet,**
   **dass** im Schritt 1) die mindestens zwei verschiedenen Messungen ($x_j$) mithilfe eines Lasermessgeräts, insbesondere einer Laserdiode, durchgeführt werden.

7. Verfahren nach einem der vorhergehenden Ansprüche,

**dadurch gekennzeichnet,**

**dass** im Schritt 2) zum, insbesondere mittelbaren, Optimieren der Koeffizienten ($c_j$) einer Linearkombination ($c_j x_j$) der Messungen ($x_j$) Koeffizienten ($d_h$) einer Linearkombination (

$$\sum_{h=1}^{K} d_h u_h$$

) von Singularvektoren ($u_h$) optimiert werden,
wobei die Singularvektoren ($u_h$) Spalten einer Singularmatrix (U) sind,
wobei die Singularmatrix (U) sich aus einer Singulärwertzerlegung (SVD) einer Messdatenmatrix (X) ergibt,
und wobei die Messdatenmatrix (X) in den Spalten die Messungen ($x_j$) enthält.

8. Verfahren nach einem der vorhergehenden Ansprüche,
   **dadurch gekennzeichnet,**

   **dass** in einem Schritt 3) durch die spektrale Struktur (a($\tilde{e}_i$)), deren Abweichung von der

   $$\sum_{j=1}^{M} c_j x_j$$

   Linearkombination ( ) der verschiedenen Messungen ($x_{j0}$) minimiert ist, der Wert ($\tilde{e}_i$) der mindestens einen Eigenschaft ($e_i$) der Substanz (A) ermittelt wird,
   wobei insbesondere der Wert ($\tilde{e}_j$) der mindes-

tens einen Eigenschaft ($e_i$) der Substanz (A) einen Druck und/oder eine Kohlensäurekonzentration eines kohlensäurehaltigen Getränkes (G) bildet.

**9.** Verfahren nach einem der vorhergehenden Ansprüche,
**dadurch gekennzeichnet,**
**dass** in einem Schritt 4) mithilfe der spektralen Struktur ($a(ẽ_i)$), deren Abweichung von der Linear-

$$\sum_{j=1}^{M} c_j x_j$$

kombination ( ) der verschiedenen Messungen ($x_j$) minimiert ist, ein Kennfeld (KF) für die spektrale Struktur ($a(ẽ_i)$) aktualisiert wird.

**10.** Messgerät (10) zur kontaktlosen Charakterisierung einer Substanz (A) mithilfe von Wellen (W),
**dadurch gekennzeichnet,**
**dass** das Messgerät (10) dazu ausgeführt ist, ein Verfahren nach einem der vorhergehenden Ansprüche durchzuführen.

**11.** Messgerät (10) nach dem vorhergehenden Anspruch,
**dadurch gekennzeichnet,**
**dass** das Messgerät (10) eine Rechnereinheit (11) aufweist, die dazu ausgeführt ist, die Koeffizienten

$$\sum_{j=1}^{M} c_j x_j$$

($c_j$) einer Linearkombination ( ) der verschiedenen Messungen ($x_j$) und den Wert ($e_j$) der mindestens einen Eigenschaft ($e_i$) der Substanz (A) zu optimieren, um die Abweichung zwischen der

$$\sum_{j=1}^{M} c_j x_j$$

Linearkombination ( ) und der spektralen Struktur ($a(ẽ_i)$) zu minimieren.

**12.** Messgerät (10) nach einem der vorhergehenden Ansprüche,
**dadurch gekennzeichnet,**

**dass** das Messgerät (10) eine Rechnereinheit (11) aufweist, die dazu ausgeführt ist, zum, insbesondere mittelbaren, Optimieren der Koeffizienten ($c_j$) einer Linearkombination ($c_j x_j$) der Messungen ($x_j$) Koeffizienten ($d_h$) einer Linear-

$$\sum_{h=1}^{K} d_h u_h$$

kombination ( ) von Singularvektoren ($u_h$) zu optimieren,
wobei die Singularvektoren ($u_h$) Spalten einer Singularmatrix (U) sind,
wobei die Singularmatrix (U) sich aus einer Singulärwertzerlegung (SVD) einer Messdatenmatrix (X) ergibt,
und wobei die Messdatenmatrix (X) in den Spalten die Messungen ($x_j$) enthält.

**13.** Messgerät (10) nach einem der vorhergehenden Ansprüche,
**dadurch gekennzeichnet,**
**dass** das Messgerät (10) eine Anzeigeeinheit (12) aufweist, die dazu ausgeführt ist, die spektrale Struktur ($a(ẽ_i)$), deren Abweichung von der Linearkombi-

$$\sum_{j=1}^{M} c_j x_j$$

nation ( ) der verschiedenen Messungen ($x_j$) minimiert ist, und/oder den ermittelten Wert ($ẽ_i$) der mindestens einen Eigenschaft ($e_i$) der Substanz (A) darzustellen.

**14.** Computer-Programm-Produkt, welches in einem Speicher (15) eines Messgeräts (10) nach einem der vorhergehenden Ansprüche 10 bis 13 hinterlegbar ist, und welches bei einer zumindest teilweisen Ausführung in einer Rechnereinheit (11) des Messgeräts (10) ein Verfahren nach einem der vorhergehenden Ansprüche 1 bis 9 durchführt.

**15.** Verwendung eines Messgeräts (10) nach einem der vorhergehenden Ansprüche 10 bis 13 zur Qualitätskontrolle von Getränken (G), vorzugsweise von kohlensäurehaltigen Getränken (G), um einen Druck (p) und/oder eine Kohlensäurekonzentration von Getränken (G), vorzugsweise von kohlensäurehaltigen Getränken (G) zu ermitteln.

**Claims**

**1.** Method for contactless characterization of a substance (A) using waves (W),

wherein the substance (A) has a spectral structure ($a(ẽ_i)$) as a characteristic field (KF) which is qualitatively dependent on at least one property ($e_i$) of the substance (A),
wherein the spectral structure ($a(ẽ_i)$) is determined by at least two different measurements ($x_j$),
and wherein the at least two different measurements ($x_j$) include disturbance structures ($s_j$) which depend on the measurement circumstances, wherein in a step 1) the at least two different measurements ($x_j$) are carried out under different measurement circumstances which have quantitatively and/or qualitatively different disturbance structures ($s_j$) and possibly quantitatively different spectral structures ($g_j \cdot a$), and in a step 2) coefficients ($c_j$) of a linear

combination ( $\sum_{j=1}^{M} c_j x_j$ ) of the different measurements ($x_j$) and the value ($\tilde{e}_i$) of the at least one property ($e_i$) of the substance (A) are optimized so that the deviation between the linear combination ( $\sum_{j=1}^{M} c_j x_j$ ) and the spectral structure (a($\tilde{e}_i$)) is minimized.

2. Method according to claim 1,
**characterized in that**
the at least two different measurements ($x_j$) are carried out at different measuring angles and/or positions with respect to a container in which the substance (A) is located.

3. Method according to claim 1 or 2,
**characterized in that**
the at least two different measurements ($x_j$) are carried out at different measurement angles and/or positions with respect to a bottle top (FK) of a bottle (F) which holds a carbonated beverage (G), the substance (A) forming a content of the bottle top (FK) of the bottle (F) above the carbonated beverage (G) in the bottle (F).

4. A method according to any one of the preceding claims,
**characterized in that**

in step 1) a plurality (M) of measurements ($x_j$), preferably up to 80 measurements ($x_j$), are carried out under different measurement conditions,
and/or that in step 1) a plurality (M) of measurements ($x_j$) are carried out over a period of up to 5 seconds, preferably 10 seconds, preferably 20 seconds.

5. A method according to any one of the preceding claims,
**characterized in that**

in step 1) the at least two different measurements ($x_j$) are carried out using electromagnetic waves with a wavelength ($\lambda$) between 800 nm and 16 $\mu$m, in particular approx. 2400 nm,
and/or that in step 1) the at least two different measurements ($x_j$) are carried out using an optical method, in particular using a spectroscopic method, preferably an absorption spectroscopic method, preferably a rovibrational spectroscopic method.

6. A method according to any one of the preceding claims,

characterized in that
in step 1) the at least two different measurements ($x_j$) are carried out with the aid of a laser measuring device, in particular a laser diode.

7. A method according to any one of the preceding claims,

**characterized in that**
in step 2) for optimizing, in particular indirectly, the coefficients ($c_j$) of a linear combination ($c_j x_j$) of the measurements ($x_j$) coefficients ($d_h$) of a

linear combination ( $\sum_{h=1}^{K} d_h u_h$ ) of singular vectors ($u_h$) can be optimized,
where the singular vectors ($u_h$) are columns of a singular matrix (U),
where the singular matrix (U) results from a singular value decomposition (SVD) of a measurement data matrix (X),
and where the measurement data matrix (X) in the columns contains the measurements ($x_j$) in the columns.

8. A method according to any one of the preceding claims,
**characterized in that**

in a step 3) by the spectral structure (a($e_i$)), whose deviation from the linear combination (

$\sum_{j=1}^{M} c_j x_j$ ) of the different measurements ($x_{j0}$) is minimized, the value ($\tilde{e}_i$) of at least one property ($e_i$) of the substance (A) is determined,
wherein in particular the value ($\tilde{e}_i$) of the at least one property ($e_i$) of the substance (A) forms a pressure and/or a carbonic acid concentration of a carbonated beverage (G).

9. A method according to any one of the preceding claims,
**characterized in that**
in a step 4), using the spectral structure (a($\tilde{e}_i$)) whose

deviation from the linear combination ( $\sum_{j=1}^{M} c_j x_j$ ) of the various measurements ($x_j$) is minimized, a characteristic field (KF) for the spectral structure (a($\tilde{e}_i$)) is updated.

10. Measuring device (10) for contactless characterization of a substance (A) using waves (W),
**characterized in that**

the measuring device (10) is designed to carry out a method according to one of the preceding claims.

11. Measuring device (10) according to the preceding claim,
**characterized in that**
the measuring device (10) has a computer unit (11) which is designed to calculate the coefficients ($c_j$) of a linear combination (

$$\sum_{j=1}^{M} c_j x_j$$

) of the various measurements ($x_j$) and the value ($\tilde{e}_i$) of the at least one property ($e_i$) of the substance (A) in order to minimize the deviation between the linear combination (

$$\sum_{j=1}^{M} c_j x_j$$

) and the spectral structure ($a(\tilde{e}_i)$).

12. Measuring device (10) according to one of the preceding claims,
**characterized in that**

the measuring device (10) has a computer unit (11) which is designed to optimize, in particular indirectly, the coefficients ($c_j$) of a linear combination ($c_j x_j$) of the measurements ($x_j$) coefficients ($d_h$) of a linear combination (

$$\sum_{h=1}^{K} d_h u_h$$

) of singular vectors ($u_h$) can be optimized,
where the singular vectors ($u_h$) are columns of a singular matrix (U),
where the singular matrix (U) results from a singular value decomposition (SVD) of a measurement data matrix (X),
and where the measurement data matrix (X) in the columns contains the measurements ($x_j$) in the columns.

13. Measuring device (10) according to one of the preceding claims,
**characterized in that**
the measuring device (10) has a display unit (12) which is designed to display the spectral structure ($a(\tilde{e}_i)$), the deviation of which from the linear combination (

$$\sum_{j=1}^{M} c_j x_j$$

) of the various measurements ($x_j$) is minimized, and/or the determined value ($\tilde{e}_i$) of the at least one property ($e_i$) of the substance (A).

14. Computer program product which can be stored in a memory (15) of a measuring device (10) according to one of the preceding claims 10 to 13, and which, when at least partially executed in a computer unit (11) of the measuring device (10), performs a method according to one of the preceding claims 1 to 9.

15. Use of a measuring device (10) according to one of the preceding claims 10 to 13 for quality control of beverages (G), preferably carbonated beverages (G), in order to determine a pressure (p) and/or a carbon dioxide concentration of beverages (G), preferably carbonated beverages (G).

## Revendications

1. Procédé de caractérisation sans contact d'une substance (A) à l'aide d'ondes (W),

la substance (A) présentant une structure spectrale ($a(\tilde{e}_i)$) en tant que champ caractéristique (KF), qui dépend qualitativement d'au moins une propriété ($e_i$) de la substance (A),
la structure spectrale ($a(\tilde{e}_i)$) étant déterminée par au moins deux mesures différentes (Xj),
et où les au moins deux mesures différentes ($x_j$) comprenant structures de perturbation ($s_j$) qui dépendent des circonstances de mesure, dans une étape 1) les au moins deux mesures différentes ($x_j$) sont effectuées dans des circonstances de mesure différentes, qui présentent des structures de perturbation quantitativement et/ou qualitativement différentes ($s_j$) et éventuellement des structures spectrales quantitativement différentes ($g_j \cdot a$), et dans une étape 2), des coefficients ($c_j$) d'une combinaison linéaire (

$$\sum_{j=1}^{M} c_j x_j$$

) ) des différentes mesures ($x_j$) et la valeur ($\tilde{e}_i$) d'au moins une propriété ($e_i$) de la substance (A) sont optimisées de manière à minimiser l'écart entre la combinaison linéaire (

$$\sum_{j=1}^{M} c_j x_j$$

) et la structure spectrale ($a(\tilde{e}_i)$).

2. Procédé selon la revendication 1,
**caractérisé en ce que**
les au moins deux mesures différentes ($x_j$) sont effectuées sous des angles de mesure différents et/ou dans des positions différentes par rapport à un récipient dans lequel se trouve la substance (A).

3. Procédé selon la revendication 1 ou 2,
**caractérisé en ce que**
les au moins deux mesures différentes ($x_j$) sont effectuées sous des angles de mesure et/ou des positions différents par rapport à une tête de bouteille (FK) d'une bouteille (F) qui contient une boisson gazeuse (G), la substance (A) formant un contenu de la tête de bouteille (FK) de la bouteille (F) au-dessus de la boisson gazeuse (G) dans la bouteille (F).

4. Procédé selon l'une quelconque des revendications précédentes,
   **caractérisé en ce que**

   à l'étape 1), une pluralité (M) de mesures ($x_j$), de préférence jusqu'à 80 mesures ($x_j$), sont effectuées dans différentes circonstances de mesure,
   et/ou **en ce que**, à l'étape 1), une pluralité (M) de mesures ($x_j$) sont effectuées sur une période allant jusqu'à 5 secondes, de préférence 10 secondes, de préférence 20 secondes.

5. Procédé selon l'une quelconque des revendications précédentes,
   **caractérisé en ce que**

   à l'étape 1), les au moins deux mesures différentes ($x_j$) sont effectuées à l'aide d'ondes électromagnétiques ayant une longueur d'onde ($\lambda$) comprise entre 800 nm et 16 $\mu$m, en particulier environ 2400 nm,
   et/ou **en ce que**, à l'étape 1), les au moins deux mesures différentes ($x_j$) sont effectuées à l'aide d'un procédé optique, en particulier à l'aide d'un procédé spectroscopique, de préférence un procédé spectroscopique d'absorption, de préférence un procédé spectroscopique rovibrationnel.

6. Procédé selon l'une quelconque des revendications précédentes,
   **caractérisé en ce que**
   à l'étape 1), les au moins deux mesures différentes ($x_j$) sont effectuées à l'aide d'un appareil de mesure laser, en particulier une diode laser.

7. Procédé selon l'une quelconque des revendications précédentes,
   **caractérisé en ce que**

   dans l'étape 2), pour optimiser, en particulier indirectement, les coefficients ($c_j$) d'une combinaison linéaire ($c_j x_j$) des mesures ($x_j$) coefficients ($d_h$) d'une combinaison linéaire (
   $$\sum_{h=1}^{K} d_h u_h$$
   ) de vecteurs singuliers ($u_h$) peuvent être optimisés,
   où les vecteurs singuliers ($u_h$) sont des colonnes d'une matrice de singularité (U),
   la matrice de singularité (U) étant obtenue à partir d'une décomposition en valeurs singulières (SVD) d'une matrice de données de mesure (X),
   et où la matrice de données de mesure (X) contient dans les colonnes les mesures ($x_j$) contiennent.

8. Procédé selon l'une quelconque des revendications précédentes,
   **caractérisé en ce que**

   dans une étape 3), par la structure spectrale ($a(\tilde{e}_i)$) dont l'écart par rapport à la combinaison linéaire (
   $$\sum_{j=1}^{M} c_j x_j$$
   ) des différentes mesures ($x_{j0}$) est minimisée, la valeur ($\tilde{e}_i$) d'au moins une propriété ($e_i$) de la substance (A) est déterminée,
   où, en particulier, la valeur ($\tilde{e}_i$) de ladite au moins une propriété ($e_i$) de la substance (A) constitue une pression et/ou une concentration en gaz carbonique d'une boisson gazeuse (G).

9. Procédé selon l'une quelconque des revendications précédentes,
   **caractérisé en ce que**
   dans une étape 4), à l'aide de la structure spectrale ($a(\tilde{e}_i)$), dont l'écart par rapport à la combinaison linéaire (
   $$\sum_{j=1}^{M} c_j x_j$$
   ) des différentes mesures ($x_j$) est minimisée, un champ caractéristique (KF) est mis à jour pour la structure spectrale ($a(\tilde{e}_i)$).

10. Appareil de mesure (10) pour la caractérisation sans contact d'une substance (A) à l'aide d'ondes (W),
    **caractérisé en ce que**
    l'appareil de mesure (10) est adapté pour mettre en oeuvre un procédé selon l'une des revendications précédentes.

11. Appareil de mesure (10) selon la revendication précédente,
    **caractérisé en ce que**
    l'appareil de mesure (10) présente une unité de calcul (11) qui est conçue pour calculer les coefficients ($c_j$) d'une combinaison linéaire (
    $$\sum_{j=1}^{M} c_j x_j$$
    ) des différentes mesures ($x_j$) et la valeur ($\tilde{e}_i$) d'au moins une propriété ($e_i$) de la substance (A) afin d'optimiser l'écart entre la combinaison linéaire (
    $$\sum_{j=1}^{M} c_j x_j$$
    ) et la structure spectrale ($a(\tilde{e}_i)$).

12. Appareil de mesure (10) selon l'une des revendications précédentes,

**caractérisé en ce que**

l'appareil de mesure (10) présente une unité de calcul (11) qui est configurée pour optimiser, en particulier indirectement, les coefficients ($c_j$) d'une combinaison linéaire ($c_j x_j$) des mesures ($x_j$) coefficients ($d_h$) d'une combinaison linéaire (

$$\sum_{h=1}^{K} d_h u_h$$

) de vecteurs singuliers ($u_h$),

où les vecteurs singuliers ($u_h$) sont des colonnes d'une matrice de singularité (U),

la matrice de singularité (U) étant obtenue à partir d'une décomposition en valeurs singulières (SVD) d'une matrice de données de mesure (X),

et où la matrice de données de mesure (X) contient dans les colonnes les mesures ($x_j$) contiennent.

13. Appareil de mesure (10) selon l'une des revendications précédentes,
**caractérisé en ce que**
l'appareil de mesure (10) présente une unité d'affichage (12) qui est réalisée pour afficher la structure spectrale ($a(\tilde{e}_i)$) dont l'écart par rapport à la combi-

$$\sum_{j=1}^{M} c_j x_j$$

naison linéaire ( ) des différentes mesures ($x_j$) est minimisée et/ou la valeur déterminée ($\tilde{e}_i$) d'au moins une propriété ($e_i$) de la substance (A).

14. Produit programme d'ordinateur qui peut être enregistré dans une mémoire (15) d'un appareil de mesure (10) selon l'une des revendications précédentes 10 à 13, et qui, lors d'une exécution au moins partielle dans une unité de calcul (11) de l'appareil de mesure (10), met en oeuvre un procédé selon l'une des revendications précédentes 1 à 9.

15. Utilisation d'un appareil de mesure (10) selon l'une des revendications précédentes 10 à 13 pour le contrôle de la qualité de boissons (G), de préférence de boissons gazeuses (G), afin de déterminer une pression (p) et/ou une concentration en gaz carbonique de boissons (G), de préférence de boissons gazeuses (G).

W

$x_1$

B

$x_2$

13

A

$x_3$

14

**Fig. 1**

$a(\widetilde{e}_i)$

$x_3$

$x_2$

$x_1$

$\lambda$

**Fig. 2**

$a(\widetilde{e}_i), i=1,...,N$

$e_1 = P_1$

$P_2$

$P_3$

$P_4$

KF

$\lambda$

**Fig. 3**

**Fig. 4**

**Fig. 5**

**Fig. 6**

$x_1$  $j=1,...,M$
$M=4$

$x_2$

$x_3$

B  A  $x_4$

**Fig. 7**

$a(\widetilde{e}_i)$

$x_4$

$x_3$

$x_2$

$x_1$

$\lambda$

$j=1,...,M$
$M=4$

**Fig. 8**

$a(e_i)$

$\lambda$

$j=1,...,M$
$M=4$
$i=1$

$c_1x_1+c_2x_2+c_3x_3+c_4x_4\overset{!}{=}a(e_1)$

**Fig. 9**

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2108115 B1
- US 5121337 A
- US 6415233 B1